(19) Europäisches Patentamt / European Patent Office / Office européen des brevets

(11) **EP 2 721 131 B1**

(12) **EUROPEAN PATENT SPECIFICATION**

(45) Date of publication and mention of the grant of the patent:
**24.07.2019 Bulletin 2019/30**

(51) Int Cl.:
*C11B 3/00* *(2006.01)*     *C11B 3/10* *(2006.01)*
*C11B 3/14* *(2006.01)*

(21) Application number: **12733534.7**

(86) International application number:
**PCT/JP2012/065796**

(22) Date of filing: **14.06.2012**

(87) International publication number:
**WO 2012/173281 (20.12.2012 Gazette 2012/51)**

(54) **METHOD FOR MANUFACTURING REFINED FATS AND OILS**

VERFAHREN ZUR HERSTELLUNG RAFFINIERTER FETTE UND ÖLE

PROCÉDÉ DE FABRICATION DE GRAISSES ET HUILES RAFFINÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2011 JP 2011132763**

(43) Date of publication of application:
**23.04.2014 Bulletin 2014/17**

(73) Proprietor: **Kao Corporation**
**Chuo-Ku**
**Tokyo 103-8210 (JP)**

(72) Inventors:
• **KASE, Minoru**
  **Kamisu-shi**
  **Ibaraki 314-0103 (JP)**
• **KOMATSU, Toshiteru**
  **Kamisu-shi**
  **Ibaraki 314-0103 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 2 175 030 | JP-A- 2002 121 581 |
| US-A- 2 454 937 | US-A- 4 089 880 |
| US-A- 4 150 045 | US-A- 4 443 379 |

**Description**

[Field of the Invention]

The present invention relates to a method for manufacturing refined fats and oils.

[Background of the Invention]

Fats and oils are essential for a human body as nutrients and source of energy supply (the primary function), and moreover, are important for providing so-called sensory function (the secondary function), which satisfies food preferences, for example, taste or aroma. In addition, fats and oils containing diacylglycerols at a high concentration are known to show physiological effects (the third function) such as body fat-burning effect.

Untreated fats and oils obtained by squeezing seeds, germs, pulp, and the like of plants contain, for example, fatty acids, monoacylglycerols, and odor components. Further, when the untreated fats and oils are processed, trace components are generated as by-products through a heating step such as a transesterification reaction, an esterification reaction, or a hydrogenation treatment, resulting in deterioration of the taste and flavor of the resultant fats and oils. Thus, a process of so-called deodorization, in which the fats and oils are brought into contact with water vapor under a reduced pressure at a high temperature, is generally performed (Patent Document 1).

Further, in order to treat diacylglycerol-rich fats and oils, it is reported to adopt a method involving adding an organic acid to fats and oils rich in diacylglycerols and subsequently carrying out a decoloration treatment and a deodorization treatment with a porous adsorbent, so as to provide good taste and flavor (Patent Document 2), or a method involving carrying out an esterification reaction between glycerin and each of fatty acids obtained by hydrolyzing raw material fats and oils by an enzymatic decomposition method and subsequently carrying out a deodorization treatment so that a deodorization time and a deodorization temperature can be each controlled in a given range (Patent Document 3).

US 4, 443, 379 describes the bleaching of edible oils. The oils are treated with a composition of activated clay and an alumino-silicate zeolite.

In US 4,089,880, a continuous process for steam-refining crude fatty oils is described. The process comprises treating the oils with clay followed by steam refining. Steam refining may be performed at temperatures in the range of 210°C to 275°C.

In US 4, 150, 045, vegetable oils are refined by treating the oils with MgO impregnated activated carbon. The process may further comprise steam distillation at temperatures in the range of from 400°F to 550°F (204°C to 288°C).

US 2,454,937 describes process for refining oils with activated magnesium oxide.

JP 2002-121581 A is concerned with a process for purifying a conjugated triene fatty acid-containing fat. The process involves a decolorization treatment using an adsorbent and/or steam distillation at a temperature of 170°C or less. Examples of the adsorbent include aluminum silicate, magnesium silicate, activated clay, acid earth, diatomaceous earth, silicon dioxide and magnesium oxide.

[Prior Art Document]

[Patent Document]

[Patent Document 1] JP-B-H03-7240
[Patent Document 2] JP-A-H04-261497
[Patent Document 3] JP-A-2009-40854
[Patent Document 4] WO 2010/126136 A1

[Summary of the Invention]

The present invention provides a method for manufacturing refined fats and oils, including:

(1) carrying out an adsorption treatment of bringing fats and oils into contact with clay (A) and at least one kind of alkaline earth metal salt (B) selected from the group consisting of calcium oxide, magnesium oxide and calcium silicate,
wherein the amount of clay (A) used in the adsorption treatment is 0.1 parts by weight or more and less than 2 parts by weight relative to 100 parts by weight of the fats and oils and the time for which the fats and oils are brought into contact with the clay (A) is 3 to 180 minutes, and

wherein the amount of the alkaline earth metal salt (B) used in the adsorption treatment is from 0.2 parts by weight or more to 10 parts by weight or less relative to 100 parts by weight of the fats and oils and the time for which the fats and oils are brought into contact with the alkaline earth metal salt (B) is 3 to 180 minutes, and

wherein the adsorption treatment of bringing the fats and oils into contact with the alkaline earth metal salt (B) is carried out in the presence of water; and

(2) subsequently carrying out a deodorization treatment of bringing the resultant fats and oils into contact with water vapor at 180°C or less.

[Detailed Description of the Invention]

In recent years, consumer demand for improvement of quality of edible fats and oils has been largely growing, and consumers who are sensitive to taste and flavor and appearances have been remarkably increased. Thus, fats and oils having higher purity and better taste and flavor and hue than conventional ones are desired.

However, it has been found that a conventional process of deodorization, which has been performed for improving the taste and flavor, may even increase the amount of by-products. That is, when a deodorization treatment is carried out at a low temperature, an effect of distilling odor components is small, resulting in fats and oils having poor taste and flavor and hue, and hence the deodorization treatment needs to be carried out at a high temperature, but it has been found that glycidol fatty acid esters are generated as different by-products at a high temperature. In particular, fats and oils rich in diacylglycerols have shown such tendency remarkably.

A method involving treating fats and oils with an adsorbent and/or an alkali in advance before a deodorization treatment is known as means for suppressing generation of glycidol fatty acid esters or the like in fats and oils (Patent Document 4). However, the taste and flavor of fats and oils obtained by the method of Patent Document 4 are unknown, and it is necessary to develop a technology for additionally improving the taste and flavor because the deodorization treatment is carried out at a high temperature even in the final step.

On the other hand, when the deodorization treatment is carried out at a low temperature, the taste and flavor and hue are improved insufficiently although generation of by-products can be suppressed to some extent. In addition, the smoke point lowers. A method for solving all the problems has not been found yet.

Therefore, the present invention relates to a method for manufacturing refined fats and oils with less by-products, good taste and flavor and hue, and reduced smoke generation.

The inventor of the present invention has made extensive studies on operations for refining fats and oils, and has found that generation of by-products is suppressed by carrying out a treatment of bringing fats and oils into contact with clay and an alkaline earth metal salt, namely at least one kind of calcium oxide, magnesium oxide or calcium silicate, in advance and subsequently carrying out a treatment of bringing the fats and oils into contact with water vapor under mild conditions, and that the fats and oils obtained through such treatments have good taste and flavor and hue, and exhibit reduced smoke generation when heated.

According to the present invention, there is provided refined fats and oils with less by-products, good taste and flavor and hue, and reduced smoke generation when heated.

A method for manufacturing refined fats and oils of the present invention includes the following steps (1) and (2).

Step (1): an adsorption treatment of bringing fats and oils into contact with clay (A) and at least one kind of alkaline earth metal salt (B) selected from the group consisting of an oxide, a carbonate, and a silicate of an alkaline earth metal, which are according to the claimed invention at least one kind of calcium oxide, magnesium oxide and calcium silicate,

wherein the amount of clay (A) used in the adsorption treatment is 0.1 parts by weight or more and less than 2 parts by weight relative to 100 parts by weight of the fats and oils and the time for which the fats and oils are brought into contact with the clay (A) is 3 to 180 minutes, and

wherein the amount of the alkaline earth metal salt (B) used in the adsorption treatment is from 0.2 parts by weight or more to 10 parts by weight or less relative to 100 parts by weight of the fats and oils and the time for which the fats and oils are brought into contact with the alkaline earth metal salt (B) is 3 to 180 minutes, and

wherein the adsorption treatment of bringing the fats and oils into contact with the alkaline earth metal salt (B) is carried out in the presence of water.

Step (2) : a deodorization treatment of bringing the fats and oils obtained in the step (1) into contact with water vapor at 180°C or less.

Herein, the fats and oils encompass fats and oils containing triacylglycerols and diacylglycerols. That is, in the step (1) of the present invention, fats and oils containing triacylglycerols or diacylglycerols are used.

There is a tendency that diacylglycerols are liable to generate by-products as compared to triacylglycerols in a refining step. Thus, it is more preferred that the manufacturing method of the present invention be applied to fats and oils containing diacylglycerols. The content of diacylglycerols in fats and oils is preferably 20 weight% (hereinafter, simply referred to as "%") or more, more preferably 50% or more, and even more preferably 70% or more. The upper limit of the content is not particularly defined, but is preferably 99% or less, more preferably 98% or less, and even more preferably 97% or less. Specifically, preferred are fats and oils containing diacylglycerols in an amount of preferably 20 to 99%, more preferably 50 to 99%, and even more preferably 70 to 99%.

The fats and oils containing diacylglycerols can be obtained through an esterification reaction between fatty acids, derived from raw material fats and oils, and glycerin, a glycerolysis reaction between raw material fats and oils and glycerin, or the like.

The esterification reaction and/or glycerolysis reaction are/is broadly classified into chemical methods using a chemical catalyst such as an alkali metal or an alloy thereof, or an oxide, a hydroxide, or an alkoxide having 1 to 3 carbon atoms of an alkali metal or an alkaline earth metal, and enzymatic methods using an enzyme such as a lipase. Among them, the reactions are preferably carried out under enzymatically mild conditions by using a lipase or the like as the catalyst in view of obtaining excellent taste and flavor or the like.

The raw material fats and oils may be any of vegetable fats and oils and animal fats and oils. Specific examples of the raw material fats and oils include rapeseed oil, sunflower oil, corn oil, soybean oil, rice oil, safflower oil, cottonseed oil, beef tallow, linseed oil, and fish oil.

The upper limit of the content of triacylglycerols in the raw material fats and oils is not particularly defined, but is preferably 85% or more, more preferably 90% or more, and even more preferably 95% or more.

The raw material fats and oils are preferably used after a deodorization treatment from the viewpoint of improving the hue and taste and flavor. Herein, the deodorization treatment for the raw material fats and oils is referred to as "preliminary deodorization treatment." The preliminary deodorization treatment is a steam distillation treatment for the raw material fats and oils, and steam distillation under reduced pressure is preferred from the viewpoint of the efficiency of deodorization.

The preliminary deodorization treatment may be performed by a batch method, a semi-continuous method, a continuous method, or the like. When the amount of fats and oils to be treated is small, the batch method is preferably used, and when the amount is large, the semi-continuous method or the continuous method is preferably used.

Example of apparatus for the semi-continuous method includes a Girdler type deodorization apparatus composed of a deodorization tower equipped with several trays. The treatment is performed in this apparatus by supplying fats and oils for deodorization from the upper part of the apparatus, bringing the fats and oils into contact with water vapor in a tray for an appropriate period of time, and supplying the fats and oils to the next lower tray so that the fats and oils are successively moved down intermittently.

Example of apparatus for the continuous method includes a thin-film deodorization apparatus filled with structures in which fats and oils in a thin-film form can be brought into contact with water vapor.

The temperature at which the raw material fats and oils are brought into contact with water vapor is preferably 180 to 250°C, more preferably 190 to 240°C, even more preferably 200 to 230°C, and even more preferably 210 to 230°C.

The time for which the raw material fats and oils are brought into contact with water vapor is preferably 10 to 180 minutes, more preferably 15 to 120 minutes, and even more preferably 20 to 90 minutes.

The pressure at which the raw material fats and oils are brought into contact with water vapor is preferably 10 to 4000 Pa, more preferably 50 to 1000 Pa, even more preferably 100 to 800 Pa, and even more preferably 150 to 700 Pa.

The amount of water vapor with which the raw material fats and oils are brought into contact is preferably 0.1 to 20 weight%/hr, more preferably 0.2 to 10 weight%/hr, even more preferably 0.3 to 5 weight%/hr, and even more preferably 0.4 to 4 weight%/hr, relative to the raw material fats and oils. Herein, the term "weight%" refers to a part by weight of water vapor relative to 100 parts by weight of the raw material fats and oils, i.e., an outer percentage (the same applies in the following).

The step (1) of the manufacturing method of the present invention includes carrying out an adsorption treatment of bringing fats and oils into contact with clay (A) and at least one kind of alkaline earth metal salt (B) selected from the group consisting of an oxide, a carbonate, and a silicate of an alkaline earth metal, which are according to the claimed invention at least one kind of calcium oxide, magnesium oxide and calcium silicate. In this treatment, the order of the contact with the clay (A) and the alkaline earth metal salt (B) is not particularly limited, and the components may be fed in an appropriate order, or may be fed simultaneously. Specifically, there may be given:

(i) bringing fats and oils into contact with clay and subsequently bringing the fats and oils with an alkaline earth metal salt;
(ii) bringing fats and oils into contact with an alkaline earth metal salt and subsequently bringing the fats and oils with clay; and
(iii) bringing fats and oils into contact with clay and an alkaline earth metal salt fed simultaneously. Note that a filtration step may be carried out between the contact operations in the methods (i) and (ii) to separate the components by filtration before the next operation.

A method for bringing fats and oils into contact with the components is not particularly limited, and examples thereof include: a method involving adding all components in a stirring bath and stirring and mixing the components; and a method involving filling a column with clay and/or an alkaline earth metal salt and passing fats and oils through the column.

The clay (A) used in the manufacturing method of the present invention may be acid clay, activated clay, or a mixture thereof. The activated clay is a product obtained by treating naturally occurring acid clay (montmorillonite clay) with a mineral acid such as sulfuric acid, and is a compound having a porous structure with a large specific surface area and adsorption capability. It is known that, when the acid clay is treated with an acid, the specific surface area, the pH of a water dispersion, and the like, are changed, thereby changing its properties. The specific surface area of the acid clay or activated clay varies depending on the degree of the acid treatment and the like, and is preferably 50 to 400 $m^2$/g. The pH of the acid clay or activated clay (5% suspension) is preferably 2.5 to 9 and more preferably 3 to 7.

Examples of the acid clay which may be used include commercially available products such as MIZUKA ACE #20 and MIZUKA ACE #400 (both of which are manufactured by MIZUSAWA INDUSTRIAL CHEMICALS, LTD.), and examples of the activated clay which may be used include commercially available products such as GALLEON EARTH V2R, GALLEON EARTH NV, and GALLEON EARTH GSF (all of which are manufactured by MIZUSAWA INDUSTRIAL CHEMICALS, LTD.).

The amount of the clay (A) used is 0.1 parts by weight or more and less than 2.0 parts by weight (hereinafter, simply referred to as "parts"), preferably 1.5 parts or less, and more preferably 1.3 parts or less, relative to 100 parts of fats and oils from the viewpoints of increasing a filtration rate and improving the productivity, the viewpoint of reducing the content of by-products, and the viewpoint of increasing the yield of fats and oils after the treatment. In addition, the lower limit of the amount of the clay (A) used is preferably 0.2 part or more, and more preferably 0.3 part or more, relative to 100 parts of fats and oils from the same viewpoints as in the case of the upper limit. More specifically, the amount of the clay (A) used is 0.1 to less than 2.0 parts, preferably 0.2 to 1.5 parts, and more preferably 0.3 to 1.3 parts, relative to 100 parts of fats and oils.

The temperature at which the fats and oils are brought into contact with the clay (A) is preferably 20 to 150°C, more preferably 40 to 135°C, and even more preferably 60 to 120°C, from the viewpoints of reducing the content of by-products and improving industrial productivity. In addition, the time for contact is 3 to 180 minutes, preferably 5 to 120 minutes, more preferably 7 to 90 minutes, and even more preferably 15 to 90 minutes, from the same viewpoints. The pressure may be reduced pressure or normal pressure, and is preferably reduced pressure from the viewpoints of suppressing oxidation and improving decoloring property.

The alkaline earth metal salt (B) used in the manufacturing method of the present invention is at least one kind selected from the group consisting of an oxide, a carbonate, and a silicate of an alkaline earth metal, which are according to the claimed invention at least one kind of calcium oxide, magnesium oxide and calcium silicate. In this case, the alkaline earth metal oxide includes at least one of calcium oxide (CaO) and magnesium oxide (MgO). Examples of the alkaline earth metal carbonate include calcium carbonate ($CaCO_3$) and magnesium carbonate ($MgCO_3$), which are not part of the claimed invention. The alkaline earth metal silicate includes calcium silicate, and magnesium silicate is not part of the claimed invention. Note that these alkaline earth metal salts may be used in various crystalline forms or as various hydrates.

Among them, from the viewpoint of improving the taste and flavor, the alkaline earth metal oxide and alkaline earth metal silicate are preferred, and the alkaline earth metal silicate is more preferred. Specifically, calcium oxide, magnesium oxide, and calcium silicate are used according to the claimed invention, and calcium silicate is preferred. These compounds may be used singly or in combination of two or more kinds thereof.

More specifically, for example, commercially available products such as food additive calcium silicate (manufactured by Tomita Pharmaceutical Co. , Ltd.) and food additive magnesium oxide DS (manufactured by Tomita Pharmaceutical Co., Ltd.) may be used.

In the adsorption treatment, the fats and oils may be brought into contact with a metal oxide (C) such as silica, alumina, aluminosilicate, or zeolite together with the alkaline earth metal salt (B).

The weight ratio of the metal oxide to the alkaline earth metal salt ((C)/(B)) is preferably 0.1 to 10, more preferably 0.5 to 8, and even more preferably 1 to 7. In addition, in order to improve the filtration performance, the components may be used in combination with a filter aid such as diatomite.

The lower limit of the amount of the alkaline earth metal salt (B) used is 0.2 part or more, and preferably 0.3 part or more, relative to 100 parts of fats and oils from the viewpoint of improving the taste and flavor, the viewpoints of increasing a filtration rate and improving the productivity, and the viewpoint of increasing the yield. In addition, the upper limit of the amount of the alkaline earth metal salt (B) used is 10 parts or less, preferably 5 parts or less, and more preferably 3 parts or less, relative to 100 parts of fats and oils from the same viewpoints as in the case of the lower limit. Specifically, the amount of the alkaline earth metal salt (B) used is 0.2 to 10 parts, preferably 0.2 to 5 parts, and more preferably 0.3 to 3 parts, relative to 100 parts of fats and oils.

The temperature at which the fats and oils are brought into contact with the alkaline earth metal salt (B) is preferably 20 to 150°C, more preferably 30 to 135°C, and even more preferably 50 to 120°C, from the viewpoints of reducing the content of by-products and improving industrial productivity. In addition, the time for contact is 3 to 180 minutes, preferably 5 to 120 minutes, more preferably 7 to 90 minutes, and even more preferably 15 to 90 minutes, from the same viewpoints. The pressure may be reduced pressure or normal pressure, and is preferably normal pressure from the viewpoints of improving the taste and flavor and suppressing smoke generation when the fats and oils are heated.

In the present invention, the adsorption treatment of bringing the fats and oils into contact with the alkaline earth metal salt (B), which is at least one of calcium oxide, magnesium oxide and calcium silicate, (step (1)) is carried out in the presence of water from the viewpoints of improving the taste and flavor and suppressing smoke generation when the fats and oils are heated. The amount of the water is preferably 5 parts or less, more preferably 0.1 to 4 parts, even more preferably 0.1 to 3 parts, even more preferably 0.1 to 2 parts, and even more preferably 0.2 to 1.5 parts, relative to 100 parts of fats and oils, from the same viewpoints . The water may be any of distilled water, ion-exchanged water, tap water, and well water.

In the present invention, subsequently, a step of bringing the fats and oils into contact with water vapor under the condition of 180°C or less (step (2)), i.e., a deodorization treatment is carried out.

In the manufacturing method of the present invention, the deodorization treatment can be carried out using the same apparatus as in the above-mentioned preliminary deodorization treatment.

In the deodorization treatment, the temperature at which the fats and oils are brought into contact with water vapor is 180°C or less from the viewpoints of reducing the content of by-products, improving the efficiency of the treatment, and improving the taste and flavor, but the temperature is preferably 175°C or less and more preferably 170°C or less, from the same viewpoints. In addition, the lower limit of the temperature at which the fats and oils are brought into contact with water vapor is preferably 100°C or more, more preferably 110°C or more, and even more preferably 120°C or more. Specifically, the temperature is preferably 100 to 180°C, more preferably 110 to 175°C, and even more preferably 120 to 170°C. Note that, in the present invention, the temperature at which the fats and oils are brought into contact with water vapor is the temperature of the fats and oils to be brought into contact with water vapor.

The time for which the fats and oils are brought into contact with water vapor is preferably 0.5 to 180 minutes, more preferably 2 to 120 minutes, even more preferably 5 to 90 minutes, and even more preferably 10 to 80 minutes, from the viewpoints of improving the efficiency of treatment and the taste and flavor.

The pressure at which the fats and oils are brought into contact with water vapor is preferably 10 to 4000 Pa, more preferably 50 to 1000 Pa, even more preferably 100 to 800 Pa, and even more preferably 150 to 700 Pa from the same viewpoints.

The amount of the water vapor with which the fats and oils are brought into contact is preferably 0.1 to 20%/hr, more preferably 0.2 to 10%/hr, even more preferably 0.3 to 5%/hr, and even more preferably 0.4 to 4%/hr, relative to the fats and oils.

In the manufacturing method of the present invention, a refining step, which is generally used for fats and oils, may be carried out before and/or after the steps (1) and (2) of the present invention. Specific examples thereof include a top cut distillation step, an acid treatment step, and a water washing step. The top cut distillation step refers to a step of distillation of fats and oils, thereby removing light weight by-products such as fatty acids from the fats and oils.

The acid treatment step refers to a step of adding a chelating agent such as citric acid to fats and oils, followed by mixing.

The water washing step refers to a step of carrying out an operation of bringing fats and oils into contact with water, thereby performing oil-water separation. Water washing can remove water-soluble by-products. The water washing step is preferably repeated more than once (for example, three times).

As a result of the treatments (steps (1) and (2)) of the present invention, generation of by-products, in particular, generation of glycidol fatty acid esters in the refining step can be suppressed, thereby manufacturing refined fats and oils with less by-products, good taste and flavor and hue, and reduced smoke generation when heated. According to the treatments of the present invention, it is possible to suppress generation of by-products throughout the manufacturing steps.

Glycidol fatty acid esters can be measured by a method according to the Deutsche Gesellschaft fur Fettwissenschaft standard method C-III 18(09) (DGF Standard Methods 2009 (14. Supplement), C-III 18(09), "Ester-bound 3-chloropropane-1,2-diol (3-MCPD esters) and glycidol (glycidyl esters)"). This measurement method is a measurement method for 3-chloropropane-1,2-diol esters (MCPD esters) and for glycidol and esters thereof. In the present invention, the method of Option A described in Section 7.1 of the Standard Methods ("7.1 Option A: Determination of the sum of ester-bound 3-MCPD and glycidol") is used to quantify glycidol esters. The details of the measurement method are described in Examples.

Glycidol fatty acid esters and MCPD esters are different substances, but, in the present invention, each value obtained by the above-mentioned measurement method is defined as the content of glycidol fatty acid esters.

The content of the glycidol fatty acid esters in the refined fats and oils of the present invention is preferably 7 ppm or less, more preferably 3 ppm or less, even more preferably 1 ppm or less, even more preferably 0.5 ppm or less, and even more preferably 0.3 ppm or less.

The smoke temperature of the refined fats and oils of the present invention is preferably 200°C or more, more preferably 210°C or more, even more preferably 215°C or more, and even more preferably 220°C or more in terms of a temperature measured by the method described in Examples, from the viewpoint of improving cooking efficiency.

Further, the content of the diacylglycerols in the refined fats and oils of the present invention is preferably 20% or more, more preferably 30% or more, even more preferably 50% or more, and even more preferably 70% or more. The upper limit of the content is not particularly defined, and is preferably 99% or less, more preferably 98% or less, and even more preferably 97% or less.

The hue of the refined fats and oils of the present invention is preferably 30 or less, more preferably 25 or less, and even more preferably 20 or less in terms of a 10R+Y value as measured by the method described in Examples.

An antioxidant can be added to the refined fats and oils of the present invention as is the case with general edible fats and oils, for the purpose of improving storage stability and taste and flavor stability. Examples of the antioxidant include natural antioxidants, tocopherol, ascorbyl palmitate, ascorbyl stearate, BHT, BHA, and phospholipids.

The refined fats and oils of the present invention can be used in exactly the same applications as general edible fats and oils, and can be widely applied to various foods and beverages in which fats and oils are used. For example, the refined fats and oils of the present invention can be used in: oil-in-water fat and oil processed foods such as drinks, desserts, ice creams, dressings, toppings, mayonnaises, and grilled meat sauces; water-in-oil fat and oil processed foods such as margarines and spreads; processed fat and oil foods such as peanut butters, frying shortenings, and baking shortenings; processed foods such as potato chips, snacks, cakes, cookies, pies, breads, and chocolates; bakery mixes; processed meat products; frozen entrees; and frozen foods.

Further disclosed is the following method with the restriction that the invention is defined by the claims.

<1> A method for manufacturing refined fats and oils, including:

(1) carrying out an adsorption treatment of bringing fats and oils into contact with clay (A) and at least one kind of alkaline earth metal salt (B) selected from the group consisting of an oxide, a carbonate, and a silicate of an alkaline earth metal, which are according to the claimed invention at least one kind of calcium oxide, magnesium oxide and calcium silicate,
wherein the amount of clay (A) used in the adsorption treatment is 0.1 parts by weight or more and less than 2 parts by weight relative to 100 parts by weight of the fats and oils and the time for which the fats and oils are brought into contact with the clay (A) is 3 to 180 minutes, and
wherein the amount of the alkaline earth metal salt (B) used in the adsorption treatment is from 0.2 parts by weight or more to 10 parts by weight or less relative to 100 parts by weight of the fats and oils and the time for which the fats and oils are brought into contact with the alkaline earth metal salt (B) is 3 to 180 minutes, and
wherein the adsorption treatment of bringing the fats and oils into contact with the alkaline earth metal salt (B) is carried out in the presence of water; and
(2) subsequently carrying out a deodorization treatment of bringing the resultant fats and oils into contact with water vapor at 180°C or less.

<2> The manufacturing method according to the above-mentioned item <1>, in which the fats and oils include fats and oils containing triacylglycerols or diacylglycerols.
<3> The manufacturing method according to the above-mentioned item <1> or <2>, in which the fats and oils contain diacylglycerols in an amount of 20% or more, preferably 50% or more, and more preferably 70% or more.
<4> The manufacturing method according to any one of the above-mentioned items <1> to <3>, in which the fats and oils contain diacylglycerols in an amount of 20 to 99%, preferably 50 to 99%, and more preferably 70 to 99%.
<5> The manufacturing method according to any one of the above-mentioned items <1> to <4>, in which the fats and oils include fats and oils obtained by one of an esterification reaction and a glycerolysis reaction from raw material fats and oils subjected to a preliminary deodorization treatment at 180 to 250°C.
<6> The manufacturing method according to any one of the above-mentioned items <1> to <5>, in which the step (1) is (i) a treatment including bringing fats and oils into contact with clay and subsequently bringing the fats and oils into contact with an alkaline earth metal salt, (ii) a treatment including bringing fats and oils into contact with an alkaline earth metal salt and subsequently bringing the fats and oils into contact with clay, or (iii) a treatment of bringing fats and oils into contact with clay and an alkaline earth metal salt fed simultaneously.
<7> The manufacturing method according to any one of the above-mentioned items <1> to <6>, in which the clay (A) is acid clay, activated clay, or a mixture thereof.
<8> The manufacturing method according to any one of the above-mentioned items <1> to <7>, in which the clay (A) is acid clay or activated clay which has a specific surface area of 50 to 400 m$^2$/g and has a pH of 2.5 to 9 in a form of a 5% suspension.

<9> The manufacturing method according to any one of the above-mentioned items <1> to <8>, in which the amount of the clay (A) used in the adsorption treatment is 1.5 parts or less, and preferably 1.3 parts or less, relative to 100 parts of the fats and oils, and the lower limit of the amount of the clay (A) used is 0.2 part or more, and preferably 0.3 part or more, relative to 100 parts of the fats and oils.

<10> The manufacturing method according to any one of the above-mentioned items <1> to <9>, in which the amount of the clay (A) used in the adsorption treatment is 0.2 to 1.5 parts, and preferably 0.3 to 1.3 parts, relative to 100 parts of the fats and oils.

<11> The manufacturing method according to any one of the above-mentioned items <1> to <10>, in which the temperature at which the fats and oils are brought into contact with the clay (A) is 20 to 150°C, preferably 40 to 135°C, and more preferably 60 to 120°C.

<12> The manufacturing method according to any one of the above-mentioned items <1> to <11>, in which the time for which the fats and oils are brought into contact with the clay (A) is 5 to 120 minutes, preferably 7 to 90 minutes, and more preferably 15 to 90 minutes.

<13> The manufacturing method according to any one of the above-mentioned items <1> to <12>, in which the alkaline earth metal salt (B) includes an alkaline earth metal silicate, namely calcium silicate.

<14> The manufacturing method according to any one of the above-mentioned items <1> to <12>, in which the alkaline earth metal salt (B) includes one kind or two or more kinds selected from the group consisting of calcium oxide, magnesium oxide, and calcium silicate, and preferably calcium silicate.

<15> The manufacturing method according to any one of the above-mentioned items <1> to <14>, in which the adsorption treatment includes bringing fats and oils into contact with silica, alumina, aluminosilicate, or zeolite together with the alkaline earth metal salt (B).

<16> The manufacturing method according to any one of the above-mentioned items <1> to <15>, in which the lower limit of the amount of the alkaline earth metal salt (B) used is 0.3 part or more, relative to 100 parts of the fats and oils, and the upper limit of the amount of the alkaline earth metal salt (B) used is 5 parts or less, and preferably 3 parts or less, relative to 100 parts of the fats and oils.

<17> The manufacturing method according to any one of the above-mentioned items <1> to <16>, in which the amount of the alkaline earth metal salt (B) used is 0.2 to 5 parts, and preferably 0.3 to 3 parts, relative to 100 parts of the fats and oils.

<18> The manufacturing method according to any one of the above-mentioned items <1> to <17>, in which the temperature at which the fats and oils are brought into contact with the alkaline earth metal salt (B) is 20 to 150°C, preferably 30 to 135°C, and more preferably 50 to 120°C.

<19> The manufacturing method according to any one of the above-mentioned items <1> to <18>, in which the time for which the fats and oils are brought into contact with the alkaline earth metal salt (B) is 5 to 120 minutes, preferably 7 to 90 minutes, and more preferably 15 to 90 minutes.

<20> The manufacturing method according to any one of the above-mentioned items <1> to <19>, in which the amount of the water in the adsorption treatment is 5 parts or less, preferably 0.1 to 4 parts, more preferably 0.1 to 3 parts, even more preferably 0.1 to 2 parts, and even more preferably 0.2 to 1.5 parts, relative to 100 parts of the fats and oils.

<21> The manufacturing method according to any one of the above-mentioned items <1> to <20>, in which the temperature at which the fats and oils are brought into contact with water vapor in the deodorization treatment is 100 to 180°C, preferably 110 to 175°C, and more preferably 120 to 170°C.

<22> The manufacturing method according to any one of the above-mentioned items <1> to <21>, in which the time for which the fats and oils are brought into contact with the water vapor in the deodorization treatment is 0.5 to 180 minutes, preferably 2 to 120 minutes, more preferably 5 to 90 minutes, and even more preferably 10 to 80 minutes.

<23> The manufacturing method according to any one of the above-mentioned items <1> to <22>, in which the pressure at which the fats and oils are brought into contact with water vapor in the deodorization treatment is 10 to 4000 Pa, preferably 50 to 1000 Pa, more preferably 100 to 800 Pa, and even more preferably 150 to 700 Pa.

<24> The manufacturing method according to any one of the above-mentioned items <1> to <23>, in which the amount of the water vapor with which the fats and oils are brought into contact in the deodorization treatment is 0.1 to 20%/hr, preferably 0.2 to 10%/hr, more preferably 0.3 to 5%/hr, and even more preferably 0.4 to 4%/hr, relative to the fats and oils.

<25> The manufacturing method according to any one of the above-mentioned items <1> to <24>, in which the content of glycidol fatty acid esters in the resultant refined fats and oils is 7 ppm or less, preferably 3 ppm or less, more preferably 1 ppm or less, even more preferably 0.5 ppm or less, and even more preferably 0.3 ppm or less in terms of the amount of MCPD esters as measured by a method according to the Deutsche Gesellschaft fur Fettwissenschaft standard method C-III 18(09).

<26> The manufacturing method according to any one of the above-mentioned items <1> to <25>, in which the smoke temperature of the resultant refined fats and oils is 200°C or more, preferably 210°C or more, more preferably 215°C or more, and even more preferably 220°C or more.

<27> The manufacturing method according to any one of the above-mentioned items <1> to <26>, in which the hue of the resultant refined fats and oils is 30 or less, preferably 25 or less, and more preferably 20 or less in terms of a 10R+Y value.

Examples

(Method for analysis)

(i) Measurement of glycidol fatty acid esters (in compliance with Option A of Deutsche Gesellschaft fur Fettwissenschaft (DGF) standard method C-III 18(09))

Approx. 100 mg of a fat and oil sample were weighed in a test tube with a lid. 50 $\mu$L of an internal standard substance (3-MCPD-d5/t-butyl methyl ether), 500 $\mu$L of a mixed solution of t-butyl methyl ether/ethyl acetate (volume ratio of 8 to 2), and 1 mL of 0.5 N sodium methoxide were added to the fat and oil sample, followed by stirring, and the whole was left to stand still for 10 minutes . 3 mL of hexane and 3 mL of a 3.3% acetic acid/20% sodium chloride aqueous solution were added thereto, followed by stirring, and the upper layer of the mixture was then removed. 3 mL of hexane were further added, followed by stirring, and the upper layer of the mixture was then removed. 250 $\mu$L of a mixed solution of 1 g of phenylboronic acid and 4 mL of 95% acetone were added, followed by stirring, and the test tube was hermetically sealed and heated at 80°C for 20 minutes. 3 mL of hexane were added to the whole, followed by stirring, and the upper layer of the resultant mixture was subjected to measurement with a gas chromatograph-mass spectrometer (GC-MS) to quantify glycidol fatty acid esters.

(ii) Glyceride composition of fats and oils

Approx. 10 mg of a fat and oil sample and 0.5 mL of a trimethylsilylating agent ("Silylating Agent TH" manufactured by Kanto Chemical Co., Inc.) were loaded into a glass sample bottle, and the glass sample bottle was hermetically sealed, and heated at 70°C for 15 minutes. 1.0 mL of water and 1.5 mL of hexane were added thereto, followed by shaking. After standing still, the upper layer was subjected to gas chromatography (GLC) for analysis.

(iii) Hue measurement

The color of the refined fats and oils means a value obtained by performing measurement with a 5.25-inch cell by using a Lovibond colorimeter according to "Color (2.2.1-1996)" in "Standard methods for the Analysis of Fats, Oils and Related Materials, Edition 2003" edited by Japan Oil Chemists' Society and making a calculation based on the following Equation (1).

$$\mathtt{Color=10R+Y} \qquad (1)$$

(In the equation, R represents a red value and Y represents a yellow value.)

[Taste and flavor]

The evaluation of taste and flavor of the refined fats and oils was performed by panelists consisting of five members. Each member ate 1 to 2 g of the refined fats and oils raw, and performed a sensory evaluation based on the criteria shown below. The average of the five evaluations was rounded off to the nearest whole number.

(Criteria for evaluation of taste and flavor)

5:  Very good
4:  Good
3:  Slightly good
2:  Poor
1:  Very poor

(Measurement of smoke temperature)

The smoke point of the refined fats and oils was measured using a Cleveland open cup flash point tester in accordance with "Smoke point, flash point, and fire point (2.2.11, 1-1996)" in "Standard methods for the Analysis of Fats, Oils and Related Materials, Edition 2003" edited by Japan Oil Chemists' Society.

(Preparation of fats and oils 1)

100 parts by weight of mixed fatty acids (soybean oil fatty acids : rapeseed oil fatty acids=7 : 3 (weight ratio)), the fatty acids being obtained from the corresponding undeodorized raw material fats and oils, and 15 parts by weight of glycerin were mixed, and the mixture was subjected to an esterification reaction with an enzyme (immobilized lipase Lipozyme RM IM manufactured by Novozymes Japan Ltd.). From the resultant esterified product, fatty acids and monoacylglycerols were removed by top cut distillation, yielding a DAG deacidified oil a (containing 11% of triacylglycerols, 88% of diacylglycerols, and 1% of monoacylglycerols). The oil contained glycidol fatty acid esters at 1.5 ppm.

(Preparation of fats and oils 2)

Mixed fats and oils (undeodorized soybean oil:undeodorized rapeseed oil=7:3 (weight ratio)) were subjected to a preliminary deodorization treatment under the conditions of a temperature of 230°C, a time of 34 minutes, a pressure of 260 Pa, and water vapor of 3%/hr-relative to the oil, yielding raw material fats and oils. Subsequently, 100 parts by weight of fatty acids obtained by using deodorized fats and oils as raw materials and 15 parts by weight of glycerin were mixed, and the mixture was subjected to an esterification reaction with an enzyme. From the resultant esterified product, fatty acids and monoacylglycerols were removed by top-cut distillation, yielding a DAG deacidified oil b (containing 10% of triacylglycerols, 89% of diacylglycerols, and 1% of monoacylglycerols). The oil contained glycidol fatty acid esters at 1.4 ppm.

(Preparation of fats and oils 3)

Mixed fats and oils (undeodorized soybean oil:undeodorized rapeseed oil=7:3 (weight ratio)) were subjected to a preliminary deodorization treatment under the conditions of a temperature of 200°C, a time of 34 minutes, a pressure of 260 Pa, and water vapor of 3%/hr-relative to the oil, yielding raw material fats and oils. Subsequently, the same operation as in "Preparation of fats and oils 2" was carried out, yielding a DAG deacidified oil c (containing 10% of triacylglycerols, 89% of diacylglycerols, and 1% of monoacylglycerols). The oil contained glycidol fatty acid esters at 1.5 ppm.

(Preparation of fats and oils 4)

Mixed fats and oils (undeodorized soybean oil:undeodorized rapeseed oil=7:3 (weight ratio)) were subjected to a preliminary deodorization treatment under the conditions of a temperature of 230°C, a time of 34 minutes, a pressure of 260 Pa, and water vapor of 3%/hr-relative to the oil, yielding raw material fats and oils. Subsequently, 100 parts by weight of fatty acids obtained by using deodorized fats and oils as raw materials and 15 parts by weight of glycerin were mixed, and the mixture was subjected to an esterification reaction with an enzyme (immobilized lipase) . From the resultant esterified product, fatty acids and monoacylglycerols were removed by top-cut distillation, yielding a DAG deacidified oil d (containing 4.8% of triacylglycerols, 94.9% of diacylglycerols, and 0.2% of monoacylglycerols). The oil contained glycidol fatty acid esters at 0.1 ppm.

(Preparation of fats and oils 5)

Mixed fats and oils (undeodorized soybean oil:undeodorized rapeseed oil=7:3 (weight ratio)) were subjected to a preliminary deodorization treatment under the conditions of a temperature of 200°C, a time of 34 minutes, a pressure of 260 Pa, and water vapor of 3%/hr-relative to the oil, yielding raw material fats and oils. Subsequently, the same operation as in "Preparation of fats and oils 4" was carried out, yielding a DAG deacidified oil e (containing 4.7% of triacylglycerols, 95.1% of diacylglycerols, and 0.1% of monoacylglycerols). The oil contained glycidol fatty acid esters at 0.1 ppm.

Examples 1 to 6 (Examples 1 to 3, 5 and 6 are not part of the claimed invention)

(Treatment with clay)

1 part of activated clay (GALLEON EARTH V2R manufactured by MIZUSAWA INDUSTRIAL CHEMICALS, LTD.) was added to 100 parts of the DAG deacidified oil a, b, or c, and the oil was brought into contact with the activated clay with stirring under reduced pressure under the condition (1) shown in Table 1. The activated clay was separated by filtration, yielding a clay-treated fat and oil sample.

(Treatment with alkaline earth metal salt)

2 parts of an alkaline earth metal salt were added to 100 parts of the clay-treated fat and oil sample, and the sample was brought into contact with the alkaline earth metal salt with stirring under normal pressure under the condition (2) shown in Table 1. The alkaline earth metal salt was separated by filtration, yielding an alkaline earth metal salt-treated fat and oil sample. In Example 4, before addition of the alkaline earth metal salt, 0.5 part of distilled water was added to 100 parts of the clay-treated fat and oil sample.

(Treatment with acid)

0.5 part of a 50% aqueous solution of citric acid was added to 100 parts of the resultant alkaline earth metal salt-treated fat and oil sample, and the mixture was stirred at 70°C for 30 minutes, yielding an acid-treated fat and oil sample.

(Water washing treatment)

10 parts of distilled water were added to 100 parts of the resultant acid-treated fat and oil sample, and the mixture was stirred at 70°C for 30 minutes and centrifuged to remove the water phase. The operation was repeated three times, yielding a water-washed fat and oil sample.

(Deodorization treatment)

The resultant water-washed fat and oil sample was deodorized by the batch method under the condition (3) shown in Table 1. The water-washed fat and oil sample was loaded into a glass Claisen flask, and subsequently brought into contact with water vapor, yielding refined fats and oils. Table 1 shows the results.

Comparative Example 1

Refined fats and oils were obtained in the same manner as in Example 1, except that silica gel (Wako gel C-200 manufactured by Wako Pure Chemical Industries, Ltd.) was used instead of the alkaline earth metal salt. Table 1 shows the results.

Comparative Example 2

(Omission of treatment with clay)

2 parts of an alkaline earth metal salt were added to 100 parts of the DAG deacidified oil a, and the oil was brought into contact with the alkaline earth metal salt with stirring under normal pressure under the condition (2) shown in Table 1. The alkaline earth metal salt was separated by filtration, yielding an alkaline earth metal salt-treated fat and oil sample.

Next, the water-washed fat and oil sample obtained by carrying out the treatment with an acid and the water washing treatment in the same manner as in Example 1 was deodorized by the batch method under the condition (3) shown in Table 1. The fat and oil sample was loaded into a glass Claisen flask, and subsequently brought into contact with water vapor, yielding refined fats and oils. Table 1 shows the results.

Comparative Example 3

(Omission of treatment with alkali earth metal salt)

In the same manner as in Example 1, the DAG deacidified oil a was treated with clay, and subsequently the clay was separated by filtration, yielding a clay-treated fat and oil sample.

Next, the water-washed fat and oil sample obtained by carrying out the treatment with an acid and the water washing treatment in the same manner as in Example 1 was deodorized by the batch method under the condition (3) shown in Table 1. The fat and oil sample was loaded into a glass Claisen flask, and subsequently brought into contact with water vapor, yielding refined fats and oils. Table 1 shows the results.

[Table 1]

| | | Example 1** | Example 2** | Example 3** | Example 4 | Example 5** | Example 6** | Comparative Example 1 | Comparative Example 2 | Comparative Example 3 |
|---|---|---|---|---|---|---|---|---|---|---|
| DAG deacidified oil | | a | a | b | b | c | b | a | a | a |
| Treatment with clay Condition (1) | Temperature [°C] | 110 | 110 | 110 | 110 | 110 | 110 | 110 | None | 110 |
| | Contact time [min] | 20 | 20 | 20 | 20 | 20 | 20 | 20 | | 20 |
| | Amount of clay used [part] | 1 | 1 | 1 | 1 | 1 | 1 | 1 | | 1 |
| Treatment with alkaline earth metal salt Condition (2) | Temperature [°C] | 70 | 70 | 70 | 70 | 70 | 70 | 70 | 70 | None |
| | Contact time [min] | 60 | 60 | 60 | 60 | 60 | 60 | 60 | 60 | |
| | Type of alkaline earth metal salt | Calcium silicate *1 | Magnesium oxide*2 | Calcium silicate *1 | Calcium silicate *1 | Calcium silicate *1 | Calcium silicate *1 | Silica Gel*3 | Calcium silicate*1 | |
| | Amount of alkaline earth metal salt used [parts] | 2 | 2 | 2 | 2 | 2 | 2 | 2 | 2 | |
| | Amount of water added [part(s)] | 0 | 0 | 0 | 0.5 | 0 | 0 | 0 | 0 | |

EP 2 721 131 B1

(continued)

| | | Example 1** | Example 2** | Example 3** | Example 4 | Example 5** | Example 6** | Comparative Example 1 | Comparative Example 2 | Comparative Example 3 |
|---|---|---|---|---|---|---|---|---|---|---|
| Deodorization treatment Condition (3) | Temperature [°C] | 150 | 150 | 150 | 150 | 150 | 180 | 150 | 150 | 150 |
| | Pressure [Pa] | 260 | 260 | 260 | 260 | 260 | 260 | 260 | 260 | 260 |
| | Contact time [min] | 60 | 60 | 60 | 60 | 60 | 60 | 60 | 60 | 60 |
| | Amount of water vapor [%/hr-relative to oil] | 3 | 3 | 3 | 3 | 3 | 3 | 3 | 3 | 3 |
| Analysis value | DAG [°C] | 88 | 88 | 89 | 89 | 89 | 89 | 88 | 88 | 88 |
| | Hue 10R+Y | 22 | 23 | 16 | 16 | 19 | 16 | 23 | 34 | 23 |
| | Glycidol fatty acid esters [ppm] | 0.2 | 0.2 | 0.2 | 0.2 | 0.2 | 0.6 | 0.2 | 1.4 | 0.2 |
| Evaluation of taste and flavor | 5 (good) ↔ 1 (poor) | 4 | 4 | 5 | 5 | 4 | 5 | 3 | 3 | 2 |
| Smoke temperature [°C] | | 215 | 225 | 215 | 220 | 215 | 220 | 210 | 215 | 205 |

*1: Food additive calcium silicate (manufactured by Tomita Pharmaceutical Co., Ltd.)
*2: Food additive magnesium oxide DS (manufactured by Tomita Pharmaceutical Co., Ltd.)
*3: Wako gel C-200 (manufactured by Wako Pure Chemical Industries, Ltd.)
**: Not part of the claimed invention

EP 2 721 131 B1

As clear from Table 1, refined fats and oils with less glycidol fatty acid esters, good taste and flavor and hue, and reduced smoke generation were able to be obtained by the manufacturing method of the present invention. In addition, when raw material fats and oils subjected to a preliminary deodorization treatment were used as sources of DAG-rich fats and oils, the taste and flavor and hue were additionally improved.

On the other hand, the fats and oils obtained by using silica gel instead of the alkaline earth metal salt (Comparative Example 1) and the fats and oils which were not treated with the alkaline earth metal salt (Comparative Example 3) had poor taste and flavor and had a low smoke temperature. In addition, the fats and oils which were not treated with the clay (Comparative Example 2) had poor hue and poor taste and flavor, and the amount of glycidol fatty acid esters was not able to be sufficiently reduced.

Examples 7 to 9 (Examples 7 and 9 are not part of the claimed invention)

(Treatment with clay)

1 part of activated clay (GALLEON EARTH V2R manufactured by MIZUSAWA INDUSTRIAL CHEMICALS, LTD.) was added to 100 parts of the DAG deacidified oil d, and the oil was brought into contact with the activated clay with stirring under reduced pressure under the condition (1) shown in Table 2. The activated clay was separated by filtration, yielding a clay-treated fat and oil sample.

(Treatment with alkaline earth metal salt)

2 parts of an alkaline earth metal salt were added to 100 parts of the clay-treated fat and oil sample, and the sample was brought into contact with the alkaline earth metal salt with stirring under nitrogen at normal pressure under the condition (2) shown in Table 2. The alkaline earth metal salt was separated by filtration, yielding an alkaline earth metal salt-treated fat and oil sample.

In Example 8, before addition of the alkaline earth metal salt, 2 parts of distilled water were added to 100 parts of the clay-treated fat and oil sample.

(Treatment with acid)

0.5 part of a 50% aqueous solution of citric acid was added to 100 parts of the resultant alkaline earth metal salt-treated fat and oil sample, and the mixture was stirred at 70°C for 30 minutes, yielding an acid-treated fat and oil sample.

(Water washing treatment)

10 parts of distilled water were added to 100 parts of the resultant acid-treated fat and oil sample, and the mixture was stirred at 70°C for 30 minutes and centrifuged to remove the water phase. The operation was repeated three times, yielding a water-washed fat and oil sample.

(Deodorization treatment)

The resultant water-washed fat and oil sample was deodorized by the batch method under the condition (3) shown in Table 1. The water-washed fat and oil sample was loaded into a glass Claisen flask, and subsequently brought into contact with water vapor, yielding refined fats and oils. Table 2 shows the results.

Comparative Example 4

Refined fats and oils were obtained in the same manner as in Example 7, except that sodium hydroxide was used instead of the alkaline earth metal salt. Table 2 shows the results.

Comparative Example 5

Refined fats and oils were obtained in the same manner as in Comparative Example 4, except that 2 parts of distilled water were added to 100 parts of the clay-treated fat and oil sample before addition of sodium hydroxide. Table 2 shows the results.

Example 10 (Not part of the claimed invention)

Refined fats and oils were obtained under the same conditions as in Example 9, except that the DAG deacidified oil e was used. Table 2 shows the results.

Example 11

Refined fats and oils were obtained under the same conditions as in Example 9, except that the DAG deacidified oil e was used, and 0.5 part of distilled water was added to 100 parts of the clay-treated fat and oil sample before addition of the alkaline earth metal salt. Table 2 shows the results.

[Table 2]

| | | Example 7** | Example 8 | Example 9** | Comparative Example 4 | Comparative Example 5 | Example 10** | Example 11 |
|---|---|---|---|---|---|---|---|---|
| DAG deacidified oil | | d | d | d | d | d | e | e |
| Treatment with clay Condition (1) | Temperature [°C] | 110 | 110 | 110 | 110 | 110 | 110 | 110 |
| | Contact time [min] | 20 | 20 | 20 | 20 | 20 | 20 | 20 |
| | Amount of clay used [part] | 1 | 1 | 1 | 1 | 1 | 1 | 1 |
| Treatment with alkaline earth metal salt Condition (2) | Temperature [°C] | 70 | 70 | 70 | 70 | 70 | 70 | 70 |
| | Contact time [min] | 60 | 60 | 60 | 60 | 60 | 60 | 60 |
| | Type of alkaline earth metal salt | Magnesium silicate*4 | Calcium silicate*1 | Calcium silicate*1 | Sodium hydroxide*5 | Sodium hydroxide*5 | Calcium silicate*1 | Calcium silicate*1 |
| | Amount of alkaline earth metal salt used [parts] | 2 | 2 | 2 | 2 | 2 | 2 | 2 |
| | Amount of water added [part(s)] | 0 | 2 | 0 | 0 | 2 | 0 | 0.5 |
| Deodorization treatment Condition (3) | Temperature [°C] | 150 | 150 | 150 | 150 | 150 | 150 | 150 |
| | Pressure [Pa] | 260 | 260 | 260 | 260 | 260 | 260 | 260 |
| | Contact time [min] | 60 | 60 | 60 | 60 | 60 | 60 | 60 |
| | Amount of water vapor [%/hr-relative to oil] | 3 | 3 | 3 | 3 | 3 | 3 | 3 |
| Analysis value | DAG [°C] | 93.8 | 93.7 | 93.8 | 92.6 | 66.5 | 93.8 | 93.9 |
| | Hue 10R+Y | 20 | 20 | 20 | 21 | 45 | 22 | 22 |
| | Glycidol fatty acid esters [ppm] | 0.1 | 0.2 | 0.0 | 0.5 | 0.4 | 0.1 | 0.2 |
| Evaluation of taste and flavor | 5 (good) ↔ 1 (poor) | 3 | 5 | 5 | 1 | 1 | 4 | 4 |

EP 2 721 131 B1

(continued)

| | Example 7** | Example 8 | Example 9** | Comparative Example 4 | Comparative Example 5 | Example 10** | Example 11 |
|---|---|---|---|---|---|---|---|
| Smoke temperature [°C] | 205 | 225 | 215 | 190 | 175 | 215 | 220 |

*1: Food additive calcium silicate (manufactured by Tomita Pharmaceutical Co., Ltd.)
*4: Food additive magnesium silicate (manufactured by Tomita Pharmaceutical Co., Ltd.)
*5: Sodium hydroxide (manufactured by Wako Pure Chemical Industries, Ltd.)
**: Not part of the claimed invention

As clear from Table 2, refined fats and oils with less glycidol fatty acid esters, good taste and flavor and hue, and reduced smoke generation were able to be obtained by the manufacturing method of the present invention. In addition, when raw material fats and oils subjected to a preliminary deodorization treatment were used as sources of DAG-rich fats and oils, the taste and flavor and hue were additionally improved. Further, the addition of a small amount of water in the adsorption treatment improved the taste and flavor and increased the smoke temperature.

On the other hand, the fats and oils obtained by using sodium hydroxide instead of the alkaline earth metal salt (Comparative Examples 4 and 5) had poor hue and taste and flavor and had a low smoke temperature.

**Claims**

1.  A method for manufacturing refined fats and oils, comprising:

    (1) carrying out an adsorption treatment of bringing fats and oils into contact with clay (A) and at least one kind of alkaline earth metal salt (B) selected from the group consisting of calcium oxide, magnesium oxide and calcium silicate, wherein the amount of clay (A) used in the adsorption treatment is 0.1 parts by weight or more and less than 2 parts by weight relative to 100 parts by weight of the fats and oils and the time for which the fats and oils are brought into contact with the clay (A) is 3 to 180 minutes,
    wherein the amount of the alkaline earth metal salt (B) used in the adsorption treatment is from 0.2 parts by weight or more to 10 parts by weight or less relative to 100 parts by weight of the fats and oils and the time for which the fats and oils are brought into contact with the alkaline earth metal salt (B) is 3 to 180 minutes, and wherein the adsorption treatment of bringing the fats and oils into contact with the alkaline earth metal salt (B) is carried out in the presence of water; and
    (2) subsequently carrying out a deodorization treatment of bringing the resultant fats and oils into contact with water vapor at 180°C or less.

2.  The method for manufacturing refined fats and oils according to claim 1, wherein the clay (A) comprises one of acid clay, activated clay, and a mixture thereof.

3.  The method for manufacturing refined fats and oils according to claim 1 or 2, wherein an amount of the water in the adsorption treatment is 5 parts by weight or less relative to 100 parts by weight of the fats and oils.

4.  The manufacturing method according to any one of claims 1 to 3, in which the step (1) is (i) a treatment including bringing fats and oils into contact with clay and subsequently bringing the fats and oils into contact with the alkaline earth metal salt, or (ii) a treatment including bringing fats and oils into contact with the alkaline earth metal salt and subsequently bringing the fats and oils into contact with clay.

5.  The manufacturing method according to any one of claims 1 to 3, in which the step (1) is (iii) a treatment of bringing fats and oils into contact with clay and the alkaline earth metal salt fed simultaneously.

6.  The manufacturing method according to any one of claim 1 to 5, in which the alkaline earth metal salt (B) is calcium silicate.

7.  The manufacturing method according to any one of claims 1 to 6, in which the adsorption treatment comprises bringing fats and oils into contact with a metal oxide (C) selected from silica, alumina, aluminosilicate, or zeolite together with the alkaline earth metal salt (B).

8.  The method for manufacturing refined fats and oils according to any one of claims 1 to 7, wherein the fats and oils contain diacylglycerols in an amount of 20 weight% or more.

9.  The method for manufacturing refined fats and oils according to any one of claims 1 to 8, wherein the fats and oils contain diacylglycerols in an amount of from 70 to 99 weight%.

10. The method for manufacturing refined fats and oils according to any one of claims 1 to 9, wherein the fats and oils comprises fats and oils obtained by an esterification reaction or a glycerolysis reaction from raw material fats and oils subjected to a preliminary deodorization treatment at from 180 to 250°C.

**Patentansprüche**

1. Verfahren zur Herstellung von raffinierten Fetten und Ölen, umfassend:

   (1) das Durchführen einer Adsorptionsbehandlung durch Inkontaktbringen von Fetten und Ölen mit Ton (A) und mindestens einer Art Erdalkalimetallsalz (B), ausgewählt aus der Gruppe, bestehend aus Calciumoxid, Magnesiumoxid und Calciumsilicat,
   wobei die Menge an Ton (A), die bei der Adsorptionsbehandlung verwendet wird, 0,1 Gewichtsteile oder mehr und weniger als 2 Gewichtsteile, bezogen auf 100 Gewichtsteile Fette und Öle, beträgt und die Zeit, für die die Fette und Öle mit dem Ton (A) in Kontakt gebracht werden, 3 bis 180 Minuten beträgt,
   wobei die Menge an Erdalkalimetallsalz (B), die bei der Adsorptionsbehandlung verwendet wird, 0,2 Gewichtsteile oder mehr bis 10 Gewichtsteile oder weniger, bezogen auf 100 Gewichtsteile Fette und Öle, beträgt und die Zeit, für die die Fette und Öle mit dem Erdalkalimetallsalz (B) in Kontakt gebracht werden, 3 bis 180 Minuten beträgt, und
   wobei die Adsorptionsbehandlung durch Inkontaktbringen der Fette und Öle mit dem Erdalkalimetallsalz (B) in Gegenwart von Wasser durchgeführt wird; und
   (2) anschließend das Durchführen einer Desodorierungsbehandlung durch Inkontaktbringen der resultierenden Fette und Öle mit Wasserdampf bei 180°C oder weniger.

2. Verfahren zur Herstellung von raffinierten Fetten und Ölen gemäß Anspruch 1, wobei der Ton (A) einen Vertreter von saurem Ton, aktiviertem Ton und einer Mischung davon umfasst.

3. Verfahren zur Herstellung von raffinierten Fetten und Ölen gemäß Anspruch 1 oder 2, wobei die Wassermenge bei der Adsorptionsbehandlung 5 Gewichtsteile oder weniger, bezogen auf 100 Gewichtsteile Fette und Öle, beträgt.

4. Herstellungsverfahren gemäß einem der Ansprüche 1 bis 3, bei dem der Schritt (1) (i) eine Behandlung ist, die das Inkontaktbringen von Fetten und Ölen mit Ton und anschließend das Inkontaktbringen der Fette und Öle mit dem Erdalkalimetallsalz beinhaltet, oder (ii) eine Behandlung ist, die das Inkontaktbringen von Fetten und Ölen mit dem Erdalkalimetallsalz und anschließend das Inkontaktbringen der Fette und Öle mit Ton beinhaltet.

5. Herstellungsverfahren gemäß einem der Ansprüche 1 bis 3, bei dem der Schritt (1) (iii) eine Behandlung ist, bei der Fette und Öle mit Ton und dem Erdalkalimetallsalz, die gleichzeitig zugeführt werden, in Kontakt gebracht werden.

6. Herstellungsverfahren gemäß einem der Ansprüche 1 bis 5, bei dem das Erdalkalimetallsalz (B) Calciumsilicat ist.

7. Herstellungsverfahren gemäß einem der Ansprüche 1 bis 6, bei dem die Adsorptionsbehandlung das Inkontaktbringen von Fetten und Ölen mit einem Metalloxid (C), ausgewählt aus Siliciumoxid, Aluminiumoxid, Aluminiumsilicat und Zeolith, zusammen mit dem Erdalkalimetallsalz (B) umfasst.

8. Verfahren zur Herstellung von raffinierten Fetten und Ölen gemäß einem der Ansprüche 1 bis 7, wobei die Fette und Öle Diacylglycerine in einer Menge von 20 Gew.-% oder mehr enthalten.

9. Verfahren zur Herstellung von raffinierten Fetten und Ölen gemäß einem der Ansprüche 1 bis 8, wobei die Fette und Öle Diacylglycerine in einer Menge von 70 bis 99 Gew.-% enthalten.

10. Verfahren zur Herstellung von raffinierten Fetten und Ölen gemäß einem der Ansprüche 1 bis 9, wobei die Fette und Öle Fette und Öle umfassen, die durch eine Veresterungsreaktion oder eine Glycerolysereaktion aus Rohmaterialfetten und -ölen erhalten werden, die einer vorläufigen Desodorierungsbehandlung bei 180 bis 250°C unterzogen wurden.

**Revendications**

1. Procédé de fabrication de graisses et d'huiles raffinées, comprenant les étapes consistant à :

   (1) effectuer un traitement d'adsorption consistant à mettre en contact des graisses et des huiles avec de l'argile (A) et au moins un type de sel de métal alcalino-terreux (B) choisi dans le groupe comprenant de l'oxyde de calcium, de l'oxyde de magnésium et du silicate de calcium,

dans lequel la quantité d'argile (A) utilisée dans le traitement d'adsorption est égale ou supérieure à 0,1 partie en poids et inférieure à 2 parties en poids pour 100 parties en poids des graisses et des huiles, et la durée pendant laquelle les graisses et les huiles sont mises en contact avec l'argile (A) est de 3 à 180 minutes, dans lequel la quantité du sel de métal alcalino-terreux (B) utilisée dans le traitement d'adsorption est de 0,2 partie en poids ou plus à 10 parties en poids ou moins pour 100 parties en poids des graisses et huiles et la durée pendant laquelle les graisses et les huiles sont mises en contact avec le sel de métal alcalino-terreux (B) est de 3 à 180 minutes, et

dans lequel le traitement d'adsorption consistant à mettre en contact les graisses et les huiles avec le sel de métal alcalino-terreux (B) est mis en oeuvre en présence d'eau ; et

(2) effectuer ensuite un traitement de désodorisation consistant à mettre en contact les graisses et huiles résultantes avec de la vapeur d'eau à 180 °C ou moins.

2. Procédé de fabrication de graisses et d'huiles raffinées selon la revendication 1, dans lequel l'argile (A) comprend une parmi une argile acide, une argile activée et un mélange de celles-ci.

3. Procédé de fabrication de graisses et d'huiles raffinées selon la revendication 1 ou 2, dans lequel la quantité d'eau dans le traitement d'adsorption est de 5 parties en poids ou moins par rapport à 100 parties en poids des graisses et des huiles.

4. Procédé de fabrication selon l'une quelconque des revendications 1 à 3, dans lequel l'étape (1) est (i) un traitement incluant la mise en contact des graisses et des huiles avec de l'argile, puis la mise en contact des graisses et des huiles avec le sel de métal alcalino-terreux, ou (ii) un traitement incluant la mise en contact de graisses et d'huiles avec le sel de métal alcalino-terreux puis la mise en contact de ces graisses et de ces huiles avec de l'argile.

5. Procédé de fabrication selon l'une quelconque des revendications 1 à 3, dans lequel l'étape (1) est (iii) un traitement consistant à mettre en contact des graisses et des huiles avec de l'argile et le sel de métal alcalino-terreux alimenté simultanément.

6. Procédé de fabrication selon l'une quelconque des revendications 1 à 5, dans lequel le sel de métal alcalino-terreux (B) est du silicate de calcium.

7. Procédé de fabrication selon l'une quelconque des revendications 1 à 6, dans lequel le traitement d'adsorption comprend la mise en contact de graisses et d'huiles avec un oxyde de métal (C) choisi parmi de la silice, de l'alumine, de l'aluminosilicate ou de la zéolite avec le sel de métal alcalino-terreux (B).

8. Procédé de fabrication de graisses et d'huiles raffinées selon l'une quelconque des revendications 1 à 7, dans lequel les graisses et les huiles contiennent des diacylglycérols en une quantité de 20 % en poids ou plus.

9. Procédé de fabrication de graisses et d'huiles raffinées selon l'une quelconque des revendications 1 à 8, dans lequel les graisses et les huiles contiennent des diacylglycérols en une quantité de 70 à 99 % en poids.

10. Procédé de fabrication de graisses et d'huiles raffinées selon l'une quelconque des revendications 1 à 9, dans lequel les graisses et les huiles comprennent des graisses et des huiles obtenues par une réaction d'estérification ou une réaction de glycérolyse à partir de matières premières de graisses et d'huiles soumises à un traitement de désodorisation préliminaire entre 180 et 250 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4443379 A
- US 4089880 A
- US 4150045 A
- US 2454937 A
- JP 2002121581 A
- JP H037240 B
- JP H04261497 A
- JP 2009040854 A
- WO 2010126136 A1

### Non-patent literature cited in the description

- Ester-bound 3-chloropropane-1,2-diol (3-MCPD esters) and glycidol (glycidyl esters). *DGF Standard Methods 2009 (14. Supplement), C-III 18(09),* 2009
- 7.1 Option A: Determination of the sum of ester-bound 3-MCPD and glycidol. *Standard Methods*
- Color (2.2.1-1996). Standard methods for the Analysis of Fats, Oils and Related Materials. 2003
- Smoke point, flash point, and fire point (2.2.11, 1-1996). Standard methods for the Analysis of Fats, Oils and Related Materials. 2003